Europäisches Patentamt

European Patent Office

Office européen des brevets

(19)

(11) **EP 1 033 583 A2**

(12) **EUROPÄISCHE PATENTANMELDUNG**

(43) Veröffentlichungstag:
06.09.2000 Patentblatt 2000/36

(51) Int. Cl.[7]: **G01S 5/14**

(21) Anmeldenummer: **00104183.9**

(22) Anmeldetag: **29.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **01.03.1999 DE 19908728**

(71) Anmelder:
**MAZ Mikroelektronik Anwendungszentrum Hamburg GmbH**
**D-21079 Hamburg (DE)**

(72) Erfinder: **Becker, Bernd**
**D-21079 Hamburg (DE)**

(74) Vertreter:
**DIEHL GLAESER HILTL & PARTNER**
**Patentanwälte**
**Königstrasse 28**
**22767 Hamburg (DE)**

(54) **Verfahren zur Bestimmung der Position eines mobilen GSM-Endgerätes**

(57) Verfahren zur Bestimmung der Koordinaten des geographischen Ortes eines mobilen GSM-Endgerätes (MS), indem die vom Abstand des Endgerätes zur Basisstation abhängigen Signallaufzeiten eingesetzt werden, um aus den ermittelten Signallaufzeiten für mindestens zwei - bei Rundstrahlern mindestens drei - dem Endgerät benachbarte Basisstationen die Abstandsradien mit den zugehörigen Toleranzen und deren gemeinsamen Schnittpunktsbereich als geographischen Ort des Endgerätes zu bestimmen. Die Mobilstation beginnt, die zu einer ersten Basisstation ausgesendeten Signalpakete schrittweise zu verzögern. Die Basisstation gibt bei Auftreten einer bestimmten Verzögerungszeit den Wert des Timingadvancesignals inkrementiert an die Mobilstation aus. In der Mobilstation wird aus der Anzahl der Verzögerungsschritte und dem Wert des Timingadvancesignals die Entfernung zur Basisstation errechnet und dieses Verfahren wird mit weiteren Basisstationen durchgeführt und aus den ermittelten Entfernungen wird der Schnittbereich und damit der Ort der Mobilstation ermittelt.

Fig. 1

EP 1 033 583 A2

**Beschreibung**

Im GSM-Netz werden Daten im Zeitmultiplexverfahren übertragen. Hierbei muß gewährleistet werden, daß Uplink-Daten (von MS zu BS) in drei Zeitschlitzen (468,75 Bitlängen, GSM 05.10, Kapitel 6.4) nach Senden der Downlink-Daten von der BS empfangen werden. Je nach Abstand von MS zu BS entstehen unterschiedliche Signallaufzeiten in der Luftstrecke. Um diese Laufzeiten auszugleichen, muß die MS den Sendezeitpunkt des Uplink-Signals einstellen. Hierzu mißt die BS die Zeit zwischen gesendeten und empfangenen Daten und teilt die Abweichung zu den vorgeschriebenen drei Zeitschlitzen der MS in bestimmten Stufen mit. Eine Stufe entspricht der Laufzeit einer Bitperiode (48/13 $\mu$s, siehe GSM 05.10, Anhang A.1.1). Es sind 64 solcher Stufen vorgesehen, die der MS als Systemparameter Timing Advance (TA) übermittelt werden. TA kann Werte zwischen 0 und 63 annehmen. Eine Veränderung von TA um 1 entspricht einer Abstandsänderung d zwischen MS und BS um etwa 554 m. Dieser Wert ergibt sich aus folgender Formel:

$$d = \frac{c}{f_b \cdot 2}$$

mit

$$f_b = \frac{13}{48} \; \mu s$$

Bitrate

$$c = 300000 \; \frac{km}{s}$$

Lichtgeschwindigkeit

Man kann den Wert TA zur Abstandsbestimmung zwischen einer MS und der BS nutzen. Laut GSM 05.10, Kapitel 6.10 darf eine MS eine Abweichung von ± 1 Bitperiode gegenüber der Sollverzögerung zwischen Empfangs- und Sendesignal haben. Der Abstand D der MS zur BS ergibt sich dann zu:

$$D = TA \; \cdot \; d - q$$

mit

$$-d \leq q \leq d$$

Dementsprechend ist eine Abstandsbestimmung in 554 m-Schritten mit einer Toleranz q von ±554 m möglich.

Die Toleranz q ist durch konstruktive Maßnahmen bekannt und konstant. Dadurch besteht die Möglichkeit, den Abstand D zwischen MS und BS von 554 m zu bestimmen.

$$D = TA \; \cdot \; d - q$$

mit

$$d = \frac{c}{f_b \cdot 2}$$

mit

$$f_b = \frac{13}{48} \; MHz$$

Bitrate

$$c = 300000 \; \frac{km}{s}$$

Lichtgeschwindigkeit

Die MS kann die Uplink-Daten in Zeitschritten $T_S$ relativ zum Sollsendezeitpunkt (drei Zeitschlitze abzüglich TA, vgl. GSM 05.10) verzögern. Hierdurch wird eine Vergrößerung der Entfernung von MS zu BS simuliert. Die Anzahl der Verzögerungsschritte wird so lange erhöht, bis die BS den Parameter TA um eins erhöht. Anhand der Anzahl dieser Schritte $N_S$ ergibt sich als Abstand zwischen MS und BS der Wert D':

$$D' = TA \; \cdot \; d - N_S \; \cdot \; d'$$

mit

$$d' = T_S \; \cdot \; c$$

Abstandsstufe
mit

$$c = 300000 \; \frac{km}{s}$$

Lichtgeschwindigkeit

Wird als Zeitschritt $T_S$ der Wert von 1/13 $\mu$s gewählt, ergibt sich als Abstandsstufe d'

$$d' = \frac{1}{13} \; \mu s \; \cdot \; 300000 \; \frac{km}{s} = 23 \; m$$

Somit wird eine Abstandsmessung ohne Einbeziehung der dynamischen Fehler auf 23 m genau ermöglicht.

**Verfahren zur Ortsbestimmung einer MS**

**nach der Erfindung in einer ersten Ausführungsform.**

**Voraussetzungen, die für dieses Verfahren gegeben sein müssen**

- Die MS muß an ihrem Standort in der Lage sein, mit mindestens drei Basisstationen zu kommunizieren.
- Der Standort der Basisstationen muß bekannt sein.

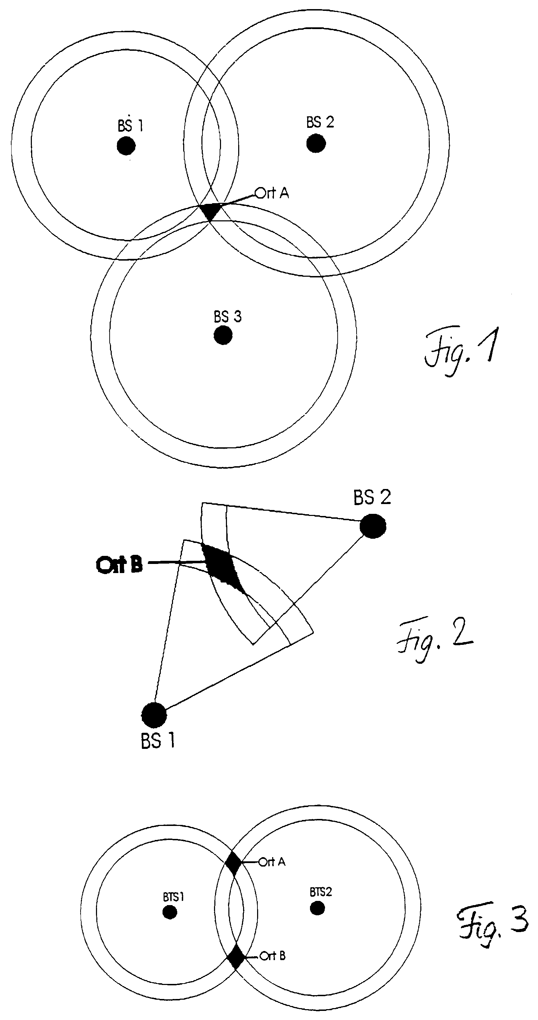

Durch Verwendung der Abstandswerte von drei Basisstationen (BS1 bis BS3 in Fig. 1) kann der Aufenthaltsort einer MS berechnet werden. Dieser Ort A ist Schnittpunkt bzw. Schnittbereich der Abstandsradien zwischen den drei Basisstationen und der MS.

**Verfahren zur Ortsbestimmung einer MS nach der Erfindung in einer zweiten Ausführungsform.**

Die meisten Antennenanlagen von Basisstationen haben Richtcharakteristik (z.B. Viertelkreise). Durch diese Eigenschaft ist es häufig möglich, daß bei nur zwei Basisstationen ein einziger Schnittpunkt der Abstandsradien entsteht. Ort B in Fig. 2 und somit Abstandsmessungen zwischen der MS und diesen zwei Basisstationen für die Ortsbestimmung dieser MS ausreichend sind.

Können Abstandswerte von mehr als den erforderlichen beiden Basisstationen verwertet werden, besteht die Möglichkeit, dieses Verfahren in anderer Paarbildung zu wiederholen und durch Vergleich dieser Werte den Einfluß externer Störgrößen (z.B. Reflexionen) zu minimieren.

**Vorteile des beschriebenen Verfahren sind**

1. die übliche Laufzeitmessung zwischen Mobilstationen und Basisstationen wird zur Abstandsbestimmung von der Mobilstation und der Basisstation genutzt,

2. die tatsächliche Laufzeitmessung wird durch eine künstliche zeitliche Verzögerung in der Mobilstation manipuliert,

3. die künstliche zeitliche Verzögerung wird höher aufgelöst als 1 bit-Periode,

4. keine Modifikationen durch den Netzwerkbetreiber sind notwendig,

5. bekannte systematisch konstante Fehler der Mobilstation werden eliminiert,

6. beliebig viele Basisstationen können zu Abstandsmessungen benutzt werden,

7. die Abstandsmessungen können von mehreren Basisstationen zu einer Ortsbestimmung verwendet werden.

Nachdem die vorangehend beschriebene Entfernungsermittlung abgeschlossen und die Entfernungsdaten gespeichert wurden, bucht sich die MS aus der verwendeten Basisstation aus und bucht in die nächste Basisstation nach der Liste der erreichbaren BCCH Träger ein. Daraufhin führt die MS die Entfernungsermittlung zu dieser neuen Basisstation aus. Falls weitere Abstandsmessungen erwünscht sind, wird dieser Vorgang wiederholt, das heißt, die MS bucht sich in eine weitere Basisstation ein, bis die erforderliche Anzahl der Abstandsmessungen erreicht ist. Bei diesem Verfahren ist es nicht zwingend erforderlich, daß die erste ausgewählte Basisstation die stärkste erreichbare ist. Die Reihenfolge der nacheinander ausgewählten Basisstationen ist vielmehr frei wählbar. Beispielsweise kann mit der stärksten erreichbaren Basisstation die letzte Entfernungsmessung durchgeführt werden, um dann in dieser Basisstation eingebucht zu bleiben.

**Verfahren nach der Erfindung zur Ortsbestimmung einer MS unter Ermittlung der Häufigkeit, mit der sich ein MS an einem bestimmten Ort befindet.**

Nachdem die BS den Parameter TA bestimmt und zur MS gesendet hat, wird die Zeitspanne zwischen Sende- und Empfangsdaten mit einer Abtastfrequenz $f_a$ bestimmt, die größer als $f_b$ ist. Die Differenz dieser Zeitspanne zu den vorgeschriebenen drei Zeitschlitzen ist der Parameter $\Delta t$.

Aus der Zeitdifferenz $\Delta t$ und der Abtastfrequenz $f_a$ ergibt sich die Anzahl der Abtastungen:

$$N = \Delta t \cdot f_a$$

Bei einer Abtastfrequenz $f_a$ von z.B. 13 MHz ergeben sich Abstands-stufen zwischen MS und BS von d'= 11,5 m:

$$d' = \frac{c}{f_a \cdot 2}$$

mit

$$f_a = 13 \text{ MHz}$$

Abtastfrequenz

$$c = 300000 \, \frac{km}{s}$$

Lichtgeschwindigkeit

Nun ergibt sich als Abstand zwischen MS und BS der Wert D':

$$D' = TA \cdot d \pm d + N \cdot d' = D + N \cdot d'$$

Die Toleranz von ± 554 m ist vom MS her bedingt.

## Voraussetzung für das Verfahren

Verfahren nach der Erfindung in der dritten Ausführungsform:

Die Abweichung von der Soliverzögerung zwischen Empfangs- und Sendesignal einer MS muß für diese MS konstant sein.

Nimmt eine MS über eine BS Kontakt mit einem Mobilfunknetz auf, kann beim Mobilfunknetzbetreiber die Signalverzögerung zwischen Sendesignal der BS und Empfangssignal der von der MS zur BS gesendeten Daten gespeichert werden. Diese Signalverzögerung ist abhängig vom Abstand der MS zu dieser BS. Bei folgenden Verbindungen der MS zu dieser BS kann die gemessene Signalerzögerung mit der gespeicherten verglichen werden. Befindet sich die MS in derselben Entfernung zu dieser BS, entspricht die gemessene der gespeicherten Signalverzögerung. Für den Parameter Timing Advance (TA) ergibt sich folgender Wert:

$$TA = \frac{D+k}{d}$$

mit

D    Abstand zwischen MS und BS (in 554 m Schritten)

k    Konstanter Fehler der Soliverzögerung der MS mit $-d \leq k \leq +d$

$$d = \frac{c}{f_b \cdot 2}$$

mit

$$f_b = \frac{13}{48} \text{ MHz}$$

Bitrate

$$c = 300000 \, \frac{km}{s}$$

Lichtgeschwindigkeit

Damit ergibt sich, daß bei konstantem Abstand D auch TA konstant und unabhängig von der Abweichung zur Soliverzögerung der MS ist. Damit ist das Ergebnis der Abstandsmessung auf 554 m reproduzierbar.

Es ergibt sich der Wert für die Anzahl der Abstandsstufen:

$$N \cdot d' + TA \cdot = D' + k$$

mit

D'    Abstand zwischen MS und BS (in 11,5 m Schritten)

k    Konstanter Fehler der Sollverzögerung der MS mit $-d \leq k \leq +d$ ;

d = 554 m

$$d' = \frac{c}{f_a \cdot 2}$$

mit

$$f_a = 13 \text{ MHz}$$

Abtastfrequenz

$$c = 300000 \, \frac{km}{s}$$

Lichtgeschwindigkeit

Damit ergibt sich, daß bei konstantem Abstand D' auch N und TA konstant und unabhängig von der Abweichung zur Sollverzögerung der MS sind. Somit ist das Ergebnis der Abstandsmessung ohne Einbeziehung der dynamischen Fehler auf 11,5 m reproduzierbar, wenn $f_a$ 13 MHz beträgt.

## Vorteile des Verfahrens zur Bestimmung, ob sich ein mobiles GSM-Endgerät wiederholt an einem bestimmten Ort aufhält, sind

1. die übliche Laufzeitmessung zwischen Mobilstationen und Basisstationen wird zur Abstandsbestimmung von der Mobilstation und der Basisstation genutzt,

2. die übliche Laufzeitmessung wird durch Zeitintervalle - die kleiner sind als eine bit-Periode - höher aufgelöst, um eine höhere Genauigkeit in der Abstandbestimmung zu erreichen,

3. die höhere Auflösung der Zeitintervalle wird an der Basisstation vorgenommen,

4. Modifikationen an der Mobilstation sind nicht notwendig,

5. systematische Fehler durch die wiederholte Abstandbewertung werden eliminiert,

6. beliebig viele Basisstationen können zu Abstandsmessungen benutzt werden,

7. die Abstandsmessungen von mehreren Basisstationen werden zu einer Ortsbestimmung verwendet.

Unter der Voraussetzung, daß die MS an ihrem Standort in der Lage ist, mehrere BS zu erreichen, wird die Abstandsbestimmung nach einem der vorangehend geschilderten Verfahren von mehreren Basisstationen durchgeführt werden.

Die Verrechnung der Abstandswerte von zwei Basisstationen (BS1 und BS2 in Abbildung 1) ermöglicht die Einschränkung des Aufenthalts der MS auf zwei Orte A und B in Fig. 3.

Durch Verwendung der Abstandswerte von drei Basisstationen (BS1 bis BS3 in Fig.1) kann der mögliche Aufenthalt einer MS auf einen Ort eingegrenzt werden.

**Verfahren nach der Erfindung zur Lokalisierung eines MS durch den Mobilfunknetzbetreiber.**

Nachdem die BS, wie bereits weiter oben geschildert, den Parameter TA bestimmt und zur Ms gesendet hat, wird die Zeitspanne zwischen Sende- und Empfangsdaten mit einer Abtastfreguenz $f_a$ bestimmt, die größer als $f_b$ ist. Die Differenz dieser Zeitspanne zu den vorgeschriebenen drei Zeitschlitzen ist der Parameter $\Delta t$.

Aus der Zeitdifferenz $\Delta t$ und der Abtastfrequenz $f_a$ ergibt sich die Anzahl der Abtastungen:

$$N = \Delta t \cdot f_a$$

Bei einer Abtastfrequenz $f_a$ von z.B. 13 MHz ergeben sich Abstandsstufen zwischen MS und BS von d' = 11,5 m.

$$d' = \frac{c}{f_a \cdot 2}$$

mit

$$f_a = 13 \text{ MHz}$$

Abtastfrequenz

$$c = 300000 \, \frac{km}{s}$$

Lichtgeschwindigkeit

Nun ergibt sich als Abstand zwischen MS und BS der Wert D':

$$D' = TA \cdot d - q + N \cdot d' = D + N \cdot d'$$

Die Toleranz von $\pm$ 554 m ist vom MS her bedingt.

**Voraussetzungen für das Verfahren nach der Erfindung in der dritten Ausführungsform:**

Die Abweichung q der Sollverzögerung zwischen Empfangs- und Sendesignal einer MS muß für diese MS bekannt und konstant sein.

Da q bekannt und konstant ist, besteht die Möglichkeit den Abstand D in Stufen von 554 m zu bestimmen.

$$D = TA \cdot d - q$$

mit

$$d = \frac{c}{f_b \cdot 2}$$

mit

$$f_b = \frac{13}{48} \text{ MHz}$$

Bitrate

$$c = 300000 \, \frac{km}{s}$$

Lichtgeschwindigkeit

Unter Verwendung der bereits erläuterten Gleichung ergibt sich der Wert D' des Abstandes zwischen MS und BS:

$$D' = N \cdot d' + TA \cdot d - q$$

mit q    Konstanter und bekannter Fehler der Sollverzögerung der MS

$$- d \leq q \leq d \; ; \; d = 554 \text{ m}$$

$$d' = \frac{c}{f_a \cdot 2}$$

mit

$$f_a = 13 \text{ MHz}$$

Abtastfrequenz

$$c = 300000 \, \frac{km}{s}$$

Lichtgeschwindigkeit

Somit hat die Abstandsmessung ohne Einbeziehung der dynamischen Fehler eine Genauigkeit von 11,5 m, wenn $f_a$ beispielsweise 13 MHz beträgt.

**- Verwendete Abkürzungen und Begriffe:**

| | |
|---|---|
| GSM: | Global System tor Mobile communication |
| MS: | Mobile Station - mobiles GSM Endgerät |
| BS: | Base Station - Basisstation im GSM Netz |
| GSM 03.22, GSM 05.08, GSM 05.10: | Technische Spezifikation für das GSM Netz der ETSI |
| ETSI: | European Telecommunications Standards Institute, 650 Route des Lucioles, Sophia Antipolis, Valbonne, France |
| Zeitmultiplex: | Verfahren, um mehrere Übertragungskanäle auf einer Trägerfrequenz abzubilden. Hierzu werden im festen Zeitraster die Kanäle hintereinander übertragen |
| Zeitschlitz: | Zeitfenster für einen Kanal beim Zeitmultiplexverfahren |
| TA: | Timing Advance - GSM interner Parameter, um Signallaufzeiten, die sich durch unterschiedliche Abstände vom MS und BS ergeben, zu kompensieren |
| Uplink: | Datenübertragungsverbindung von MS zu BS |
| Downlink: | Datenübertragungsverbindung von BS zu MS |

**Patentansprüche**

1. Verfahren zur Bestimmung der Koordinaten des geographischen Ortes eines mobilen GSM-Endgerätes (MS), indem die vom Abstand des Endgerätes zur Basisstation abhängigen Signallaufzeiten eingesetzt werden, um aus den ermittelten Signallaufzeiten für mindestens zwei - bei Rundstrahlern mindestens drei - dem Endgerät benachbarte Basisstationen die Abstandsradien mit den zugehörigen Toleranzen und deren gemeinsamen Schnittpunktsbereich als geographischen Ort des Endgerätes zu bestimmen, dadurch gekennzeichnet,

dass die Mobilstation beginnt, die zu einer ersten Basisstation ausgesendeten Signalpakete schrittweise zu verzögern, wobei diese Schritte einem Bruchteil des Timingadvancesignal-Zeitinkrements und damit einer scheinbaren Vergrößerung des Abstands zu der Basisstation entsprechen,

dass die Basisstation bei Auftreten einer bestimmten Verzögerungszeit - wie bislang bei einer tatsächlichen Erhöhung der Entfernung Basistation-Mobilstation - den Wert des Timingadvancesignals inkrementiert an die Mobilstation ausgibt,

dass in der Mobilstation aus der Anzahl der Verzögerungsschritte und dem Wert des Timingadvancesignals die Entfernung zur Basisstation errechnet wird,

dass die Mobilstation dieses Verfahren mit mindestens einer, vorzugsweise zwei weiteren Basisstationen durchführt, und

dass die Mobilstation selbst oder die Mobilstation über einen Provider aus den ermittelten Entfernungen den Schnittbereich und damit den Ort der Mobilstation ermittelt.

*Fig. 1*

*Fig. 2*

*Fig. 3*